# DEMANDE DE BREVET EUROPEEN

(11) **EP 0 927 853 A1**
(43) Date de publication de la demande: **07.07.1999**
(21) Numéro de dépôt: 98402765.6
(22) Date de dépôt: 06.11.1998
(51) Int. Cl.: F22B 37/00, G21C 17/017

(54) **Procédé d'aménagement des structures internes d'un générateur de vapeur**

(30) Priorité: 30.12.1997 FR 9716707
(71) Demandeur: FRAMATOME, 92400 Courbevoie (FR)
(72) Inventeur: Blocquel, Alain, 69570 Dardilly (FR)
(74) Mandataire: Bouget, Lucien

(57) **Abrégé**

On introduit un premier dispositif d'usinage dans l'enveloppe externe (2) du générateur de vapeur (1) par un trou de visite (9) dans la partie supérieure de l'enveloppe externe (2), on met en place le premier dispositif d'usinage sur une partie supérieure de l'enveloppe de faisceau (4) renfermant le faisceau (3) du générateur de vapeur, on réalise par usinage, au moins une ouverture de passage (16) à travers l'enveloppe de faisceau (4) dans sa partie supérieure, on introduit dans l'enveloppe de faisceau (4) par l'ouverture de passage (16), au moins un second dispositif d'usinage et on réalise, en utilisant le second dispositif d'usinage, par découpage de tubes du faisceau (3) et de parties (21, 22) des plaques-entretoises (6a, 6) un passage de cheminement (15) du moyen d'intervention vers une pluralité de zones d'intervention dans le faisceau de tubes (3) du générateur de vapeur (1).

## Description

L'invention concerne un procédé d'aménagement des structures internes d'un générateur de vapeur, en vue de l'introduction et de la mise en place d'un moyen d'intervention dans une position de service, dans une partie des structures internes.

On connaît des générateurs de vapeur, tels que ceux qui sont utilisés pour produire de la vapeur, à partir de la chaleur fournie par l'eau de refroidissement d'un réacteur nucléaire à eau sous pression. De tels générateurs de vapeur comportent une enveloppe externe de forme générale cylindrique qui est disposée avec son axe vertical et qui renferme des structures internes du générateur de vapeur comportant en particulier le faisceau de tubes d'échange assurant le transfert de la chaleur entre le fluide primaire constitué par l'eau sous pression du refroidissement du réacteur nucléaire qui circule à l'intérieur des tubes du faisceau et l'eau d'alimentation qui est misé en contact avec la surface extérieure des tubes du faisceau dans la partie secondaire du générateur de vapeur.

Le faisceau du générateur de vapeur est constitué par un grand nombre de tubes d'échange (plusieurs milliers de tubes) cintrés en forme d'U et comportant chacun deux branches droites qui sont fixées à leurs extrémités dans des trous traversant une plaque tubulaire solidaire de l'enveloppe externe du générateur de vapeur. Dans la position de service du générateur de vapeur, l'enveloppe externe de forme cylindrique est placée avec son axe vertical, la plaque tubulaire est horizontale et les branches droites des tubes du faisceau sont verticales. Le faisceau de tubes d'échange est disposé à l'intérieur d'une enveloppe de faisceau de forme générale cylindrique qui est placée dans une disposition coaxiale à l'intérieur de l'enveloppe externe du générateur de vapeur. L'enveloppe de faisceau qui entoure complètement le faisceau est fermée à sa partie supérieure, au-dessus de la partie supérieure du faisceau constitué par les parties cintrées des tubes. L'enveloppe de faisceau comporte, à sa partie supérieure, une ouverture de passage de la vapeur produite au contact des tubes du faisceau. La vapeur sortant de l'enveloppe du faisceau à sa partie supérieure passe à l'intérieur d'un ensemble de séparateurs et de sécheurs occupant toute la partie supérieure de l'enveloppe externe du générateur de vapeur, au-dessus de l'enveloppe de faisceau. La partie supérieure de l'enveloppe externe est traversée par au moins une ouverture de visite donnant accès à la partie interne du générateur de vapeur, au-dessus de l'enveloppe de faisceau.

L'eau d'alimentation du générateur de vapeur est introduite, à la partie supérieure de l'enveloppe de faisceau, dans un espace annulaire entre l'enveloppe de faisceau et l'enveloppe externe. L'eau d'alimentation circule dans la direction verticale, tout d'abord de haut en bas dans l'espace annulaire entre l'enveloppe de faisceau et l'enveloppe externe, jusqu'à la plaque tubulaire du générateur de vapeur, pour pénétrer à l'intérieur de l'enveloppe de faisceau dont la paroi, à sa partie inférieure, ménage un espace de passage d'eau au-dessus de la plaque tubulaire.

La plaque tubulaire est percée d'un réseau de trous de passage et de fixation des parties d'extrémité des branches droites des tubes du faisceau, à l'exception d'une zone centrale de direction diamétrale exempte de trous de passage de tubes. Chacun des tubes du faisceau cintrés en U comporte une première branche engagée et fixée dans un trou d'une première partie du réseau de trous situés d'un côté de la zone centrale et une seconde branche engagée et fixée dans un trou de la seconde partie du réseau placé dans une disposition symétrique par rapport à la position du premier trou, par rapport au diamètre de la plaque tubulaire dirigé suivant la zone centrale exempte de trou.

Les branches droites du faisceau de tubes sont maintenues par des plaques-entretoises réparties suivant la longueur du faisceau, à l'intérieur de l'enveloppe de faisceau et comportant des réseaux de trous identiques au réseau de trous de la plaque tubulaire.

De cette manière, le faisceau de tubes, qui présente une forme générale cylindrique et qui est placé dans une disposition coaxiale par rapport à l'enveloppe de faisceau et à l'enveloppe externe, comporte à sa partie centrale un espace vide de tubes, de direction axiale, à l'aplomb de la zone centrale diamétrale de la plaque tubulaire exempte de trou de fixation de tube.

La partie primaire du générateur de vapeur est constituée par l'espace intérieur des tubes du faisceau et par une boîte à eau disposée en dessous de la plaque tubulaire du générateur de vapeur dans laquelle débouchent les extrémités des tubes du faisceau fixées dans les trous traversant la plaque tubulaire.

La partie secondaire du générateur de vapeur est constituée par la partie interne de l'enveloppe externe du générateur de vapeur, au-dessus de la plaque tubulaire. La partie secondaire du générateur de vapeur renferme les structures internes qui comportent en particulier le faisceau du générateur de vapeur, l'enveloppe de faisceau et les séparateurs et sécheurs de la vapeur.

Après un certain temps de fonctionnement du générateur de vapeur, il est nécessaire d'effectuer certaines interventions à l'intérieur du générateur de vapeur et en particulier à l'intérieur de la partie secondaire, ces interventions pouvant être des opérations d'inspection, de nettoyage, de réparation ou d'extraction de corps étrangers du faisceau de tubes de générateur de vapeur. Ces interventions sont généralement réalisées dans le cadre des opérations de maintenance annuelles des générateurs de vapeur, après arrêt du réacteur nucléaire, par exemple pour rechargement du coeur en combustible nucléaire.

Les interventions sont généralement réalisées au niveau de la plaque tubulaire du générateur de vapeur et éventuellement au niveau des plaques-entretoises.

L'une des opérations de maintenance habituellement effectuées au niveau de la plaque tubulaire consiste à éliminer par lançage des boues déposées sur la face supérieure de la plaque tubulaire, du côté secondaire du générateur de vapeur. On peut également réaliser l'extraction de corps étrangers introduits avec l'eau d'alimentation, entre les tubes du faisceau, lorsque de tels corps sont détectés lors d'une inspection télévisuelle du faisceau.

Pour réaliser les différentes interventions dans la partie secondaire du générateur de vapeur, on a proposé divers dispositifs permettant d'accéder à des zones d'intervention dans la partie secondaire du générateur de vapeur.

Pour réaliser une inspection visuelle à l'intérieur de la partie secondaire, on a par exemple proposé l'utilisation d'un petit véhicule équipé d'une caméra, un dispositif porte-outils qui peut être utilisé dans la zone annulaire entre l'enveloppe de faisceau et l'enveloppe externe et différents dispositifs d'inspection qui peuvent être introduits entre les tubes du faisceau.

Pour réaliser l'inspection, le nettoyage par lançage des plaques et l'extraction de corps migrants du faisceau, on a également proposé divers dispositifs qui peuvent être introduits et déplacés au-dessus de la plaque tubulaire, dans l'espace libre central du faisceau.

Certains dispositifs permettent également de réaliser des inspections ou des nettoyages, dans une partie du faisceau située au-dessus de la plaque tubulaire, par exemple au-dessus d'une plaque-entretoise ou entre deux plaques-entretoises quelconques.

De manière générale, toutes les interventions effectuées dans la partie secondaire du générateur de vapeur sont réalisées en utilisant des dispositifs, de déplacement, d'inspection ou de maintenance, qui sont introduits à l'intérieur de la partie secondaire du générateur de vapeur par des orifices traversant l'enveloppe externe et l'enveloppe de faisceau, à un niveau correspondant à la partie basse du faisceau, légèrement au-dessus de la plaque tubulaire. De tels orifices, appelés trous de poing ou trous d'oeil, suivant leur dimension, peuvent être disposés pour donner accès à l'espace central libre du faisceau du générateur de vapeur.

Pour accéder aux parties supérieures du faisceau du générateur de vapeur, entre les plaques-entretoises, on fait passer les outils d'inspection ou d'intervention à travers des ouvertures, par exemple de forme rectangulaire ou de forme circulaire de grande dimension, traversant les plaques-entretoises, dans leur partie centrale, à l'aplomb de la partie centrale de la plaque tubulaire exempte de trou de passage de tube, appelée ru d'eau central.

On a également proposé de réaliser des examens à l'intérieur du faisceau en utilisant une caméra vidéo de très faible diamètre qui est introduite dans l'enveloppe de faisceau par sa partie supérieure, de manière à réaliser une inspection visuelle de la partie périphérique de la plaque entretoise supérieure.

On peut également réaliser une inspection au niveau des plaques-entretoises situées en dessous de la plaque supérieure, en faisant passer la sonde ou caméra dans les espaces entre les tubes et dans des trous de passage d'eau traversant les plaques-entretoises. La mise en oeuvre de ce procédé est limitée du fait qu'on doit utiliser une sonde ou caméra de très faible diamètre (6 mm) et que les zones d'inspection sont limitées par la présence de barres antivibratoires dans la partie supérieure du faisceau du générateur de vapeur et qu'en conséquence, l'inspection ne peut être effectuée que dans une petite partie du faisceau du générateur de vapeur.

De manière générale, les procédés et dispositifs d'inspection visuelle ou de nettoyage connus ne peuvent être utilisés, pour réaliser une inspection ou un nettoyage dans une partie supérieure du faisceau du générateur de vapeur, que si le générateur de vapeur comporte des plaques-entretoises ayant des ouvertures situées à l'aplomb du ru d'eau central ou des trous de passage d'eau. Ces procédés et dispositifs sont par conséquent inutilisables sur un grand nombre de générateurs de vapeur de modèles différents qui ne comportent pas ces particularités de conception concernant leurs plaques-entretoises.

En outre, les dispositifs connus d'inspection ou de nettoyage empruntent, pour accéder aux espaces entre les tubes, au-dessus des différentes plaques-entretoises réparties suivant la hauteur du faisceau, un cheminement nécessitant trois ou même quatre changements de direction et doivent être déplacés, dans la direction verticale, vers les parties supérieures du faisceau du générateur de vapeur; en outre, les déplacements des dispositifs d'intervention sont réalisés dans des espaces de dimensions très réduites. Toutes ces contraintes nécessitent de disposer de moyens très complexes et de mises en oeuvre extrêmement délicates pour déplacer et actionner les moyens d'intervention dans le faisceau du générateur de vapeur.

Le but de l'invention est de proposer un procédé d'aménagement des structures internes d'un générateur de vapeur, en vue de l'introduction et de la mise en place d'un moyen d'intervention en position de service, dans une partie des structures internes, le générateur de vapeur comportant une enveloppe externe de forme générale cylindrique disposée avec son axe vertical et les structures internes qui comportent un faisceau de tubes d'échange cintrés en U dont les branches droites verticales sont fixées à leur extrémité dans des trous traversant une plaque tubulaire solidaire de l'enveloppe externe, les trous étant disposés de manière telle qu'il subsiste un espacé vide de tubes dans une partie centrale du faisceau de direction diamétrale, une enveloppe de faisceau de forme générale cylindrique disposée coaxialement à l'intérieur de l'enveloppe externe, entourant le faisceau et fermée à sa partie supérieure, au-dessus de la partie supérieure du faisceau, constituée par les parties cintrées des tubes, une pluralité de plaques-entretoises de maintien des tubes du faisceau sensiblement horizontales et réparties suivant la direction verticale du générateur de vapeur à l'intérieur de l'enveloppe de faisceau et un trou de visite traversant l'enveloppe externe dans sa partie supérieure, ce procédé permettant un cheminement du moyen d'intervention à l'intérieur de la partie secondaire du générateur de vapeur, pour atteindre une pluralité de zones du faisceau de tubes.

Dans ce but :
- on introduit un premier dispositif d'usinage dans l'enveloppe externe, par le trou de visite,
- on met en place le premier dispositif d'usinage sur au moins une partie supérieure de l'enveloppe de faisceau,
- on réalise, par usinage, au moins une ouverture de passage à travers l'enveloppe de faisceau, dans sa partie supérieure,
- on introduit dans l'enveloppe de faisceau, par l'ouverture de passage, au moins un second dispositif d'usinage, et
- on réalise, en utilisant l'au moins un second dispositif d'usinage, par découpage de tubes du faisceau et éventuellement de parties des plaques-entretoises, un passage de cheminement du moyen d'intervention vers une pluralité de zones d'intervention dans le faisceau de tubes du générateur de vapeur.

Afin de bien faire comprendre l'invention, on va décrire, en se référant aux figures jointes en annexe, la mise en oeuvre du procédé de l'invention, en vue de réaliser des interventions dans la partie secondaire d'un générateur de vapeur d'un réacteur nucléaire à eau sous pression.

La figure 1 est une vue en perspective éclatée d'un générateur de vapeur d'un réacteur nucléaire à eau sous pression.

La figure 2 est une vue en perspective éclatée d'une partie supérieure d'un générateur de vapeur dans lequel on met en oeuvre le procédé suivant l'invention.

La figure 3 est une vue partielle en coupe et en élévation d'une partie supérieure du générateur de vapeur dans lequel on met en oeuvre le procédé suivant l'invention et suivant un premier mode de réalisation.

La figure 4 est une vue en coupe et en élévation d'une partie du faisceau et de l'enveloppe du faisceau du générateur de vapeur dans lequel on met en oeuvre le procédé de l'invention selon un second mode de réalisation.

La figure 5 est une vue partielle en coupe et en élévation d'une partie du faisceau et de l'enveloppe de faisceau d'un générateur de vapeur dans lequel on met en oeuvre le procédé de l'invention suivant un troisième mode de réalisation.

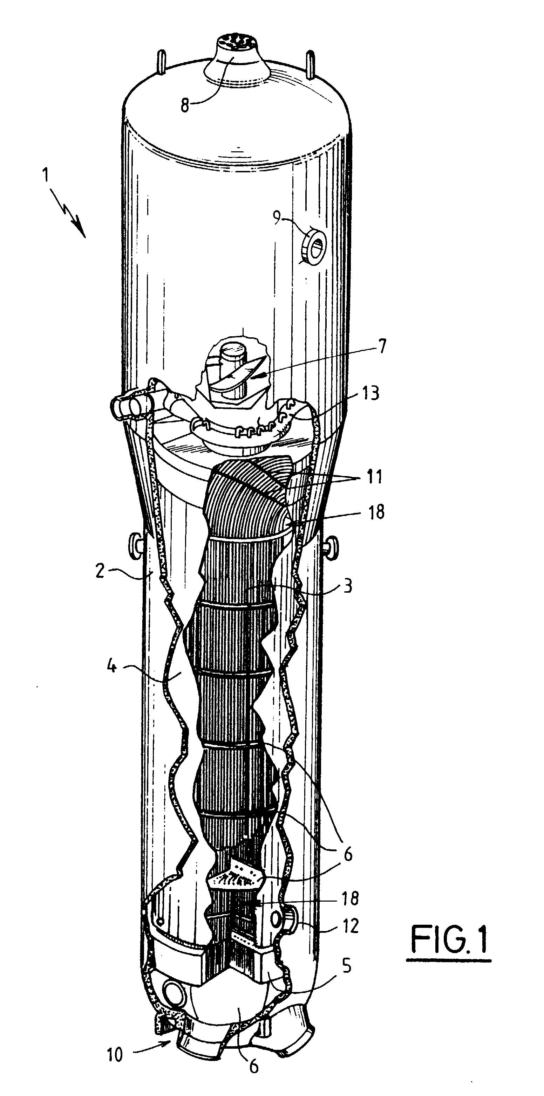

Sur la figure 1, on voit un générateur de vapeur d'un réacteur nucléaire à eau sous pression désigné de manière générale par le repère 1.

Le générateur de vapeur comporte une enveloppe externe 2 de forme générale cylindrique comportant une partie inférieure à plus faible diamètre dans laquelle est disposé le faisceau de tubes 3 du générateur de vapeur et une partie supérieure à plus grand diamètre dans laquelle est disposé l'ensemble 7 des séparateurs et sécheurs de la vapeur produite dans le générateur de vapeur.

La partie inférieure et la partie supérieure de l'enveloppe externe 2 du générateur de vapeur qui sont de forme cylindrique sont reliées entre elles par une partie d'enveloppe externe de forme tronconique.

La partie supérieure de l'enveloppe externe est fermée par un fond bombé traversé à sa partie centrale par une tubulure 8 de sortie de vapeur du générateur de vapeur.

La partie inférieure de l'enveloppe externe 2 est fixée, à sa partie inférieure, à une plaque tubulaire 5 traversée par des ouvertures de passage et de fixation des extrémités des tubes du faisceau 3 du générateur de vapeur.

Le faisceau de tubes 3 du générateur de vapeur est disposé à l'intérieur d'une enveloppe de faisceau 4 qui est fixée dans une disposition coaxiale à l'intérieur de l'enveloppe externe 2.

L'enveloppe de faisceau 4 est fermée à sa partie supérieure dans une zone située au-dessus de l'extrémité supérieure du faisceau 3. Toutefois, à sa partie centrale, la partie d'extrémité supérieure de l'enveloppe de faisceau 4 comporte une ouverture de sortie de vapeur en direction des séparateurs et sécheurs de vapeur 7 disposés dans la partie supérieure de l'enveloppe externe 2.

Un ou plusieurs trous de visite 9 traversant l'enveloppe externe donnent accès, depuis l'extérieur du générateur de vapeur, à la partie interne de l'enveloppe 2 renfermant les séparateurs et sécheurs 7.

Chacun des tubes du faisceau 3 est cintré en forme d'U et comporte deux branches droites parallèles dont les extrémités sont fixées chacune dans une ouverture traversant la plaque tubulaire 5. Les trous traversants de la plaque tubulaire 5 sont disposés suivant un réseau régulier sur toute la surface de la plaque, à l'exception d'une partie périphérique et d'une partie centrale de direction diamétrale par rapport à laquelle les ouvertures de la plaque tubulaire sont placées symétriquement. Les extrémités des branches droites d'un tube quelconque du faisceau sont fixées dans deux ouvertures placées symétriquement par rapport à la zone centrale exempte de trous de la plaque tubulaire.

Les branches droites des tubes du faisceau 3 sont maintenues par des plaques-entretoises 6 réparties suivant la longueur des branches, dans la direction axiale du générateur de vapeur, chacune des plaques entretoises 6 comportant un réseau de trous analogue au réseau de trous de la plaque tubulaire 5.

Les plaques entretoises sont maintenues à l'intérieur de l'enveloppe 4 de faisceau, par des tirants parallèles à l'axe du faisceau et du générateur de vapeur.

Dans certains générateurs de vapeur, un tirant de maintien des plaques-entretoises 6 traverse les plaques dans leur partie centrale exempté de trous de passage de tubes.

Les tubes dont les branches droites traversent les ouvertures de la plaque tubulaire et les ouvertures des plaques-entretoises au voisinage de la périphérie de ces plaques, présentent un cintre ayant un grand rayon de courbure et sont désignés comme grands cintres, alors que les tubes, dont les branches sont engagées dans des trous de la plaque tubulaire et des plaques-entretoises placées au voisinage des zones centrales des plaques de direction diamétrale exempte de trous, présentent un faible rayon de courbure et sont désignés comme petits cintres.

Du fait de la présence de zones centrales de direction diamétrale exempte de trous de passage de tubes dans la plaque tubulaire et les plaques-entretoises, ces zones exemptes de trous étant disposées à l'aplomb les unes des autres, le faisceau 3 de tubes du générateur de vapeur comporte à sa partie centrale une zone libre, vide de tubes, de direction diamétrale qui est délimitée par les petits cintres alignés dans la direction des zones diamétrales de la plaque tubulaire et des plaques-entretoises exemptes de trous de passage de tubes.

La partie inférieure de l'enveloppe externe 2 du générateur de vapeur est solidaire, à son extrémité inférieure, en dessous de la plaque tubulaire 5, d'une paroi hémisphérique délimitant une boîte à eau 10 dans laquelle débouchent les extrémités des tubes du faisceau.

Dans sa position de service, le générateur de vapeur, comme il est représenté à la figure 1, est placé avec son axe vertical, la plaque tubulaire 5 et les plaques-entretoises 6 étant horizontales.

Les parties cintrées des tubes du faisceau 3, qui sont juxtaposées et qui constituent la partie supérieure du faisceau ou chignon, sont maintenues par des barres antivibratoires engagées entre des nappes de tubes successives et maintenues par des arceaux 11. Le chignon du faisceau 3 du générateur de vapeur est disposé immédiatement en dessous de la partie d'extrémité supérieure fermée de l'enveloppe de faisceau 4.

L'enveloppe externe 2 du générateur de vapeur est traversée, à sa partie inférieure, immédiatement au-dessus de la plaque tubulaire 5, par des trous de visite tels que 12 qui peuvent être placés dans l'alignement de la zone libre centrale de direction diamétrale du faisceau 3, constituant au-dessus de la plaque tubulaire 5, le ru d'eau central du générateur de vapeur.

Les réseaux de trous de la plaque tubulaire 5 et des plaques-entretoises 6 constituent des rangées rectilignes, de telle sorte que les tubes du faisceau 3 sont disposés suivant des nappes planes successives dans lesquelles les rayons de courbure des cintres augmentent de la partie centrale de la nappe constituée par un petit cintre vers l'extérieur. Les dispositions des trous de passage des tubes sont telles qu'il existe des espaces entre les nappes de tubes et des espaces libres entre les tubes des nappes de tubes, ces espaces libres étant généralement désignés comme espaces inter-tubes.

De l'eau d'alimentation du générateur de vapeur est introduite dans l'enveloppe 2, au-dessus de la partie supérieure de l'enveloppe de faisceau 4, par un tore d'alimentation 13.

L'eau d'alimentation introduite dans le générateur de vapeur circule dans la direction verticale et de haut en bas, dans un espace annulaire 14 ménagé entre l'enveloppe externe 2 et l'enveloppe de faisceau 4 du générateur de vapeur.

L'extrémité inférieure de l'enveloppe de faisceau 4 est disposée à une certaine distance au-dessus de la partie périphérique de la plaque tubulaire 5, de sorte qu'un espace de communication entre l'espace annulaire compris entre l'enveloppe externe 2 et l'enveloppe de faisceau 4 et l'espace interne de l'enveloppe de faisceau 4 renfermant le faisceau 3 est ménagé au-dessus de la plaque tubulaire 5. L'eau d'alimentation pénètre dans l'enveloppe de faisceau par cet espace libre au-dessus de la plaque tubulaire. L'eau d'alimentation circule ensuite en contact avec les tubes du faisceau 3, de bas en haut, de telle sorte que l'eau d'alimentation s'échauffe et se vaporise par échange thermique avec de l'eau de refroidissement primaire du réacteur nucléaire circulant dans les tubes du faisceau.

La vapeur formée par la vaporisation de l'eau d'alimentation est évacuée par l'ouverture de la partie centrale de l'extrémité supérieure de l'enveloppe de faisceau 4.

La boîte à eau 10 du générateur de vapeur et les espaces intérieurs des tubes du faisceau 3 dans lesquels circule l'eau de refroidissement primaire du réacteur nucléaire constituent la partie primaire du générateur de vapeur.

La partie du générateur de vapeur interne à l'enveloppe 2, située au-dessus de la plaque tubulaire 5, constitue la partie secondaire du générateur de vapeur.

Après un certain temps de fonctionnement du générateur de vapeur, par exemple après un fonctionnement d'une durée de l'ordre d'un an, pendant un arrêt et après refroidissement du réacteur nucléaire, il peut être nécessaire de réaliser différentes interventions dans la partie secondaire du générateur de vapeur et, en particulier, à l'intérieur du faisceau 3 du générateur de vapeur, au-dessus de chacune des plaques-entretoises 6 et dans les espaces inter-tubes du faisceau. Ces interventions sont généralement des opérations d'inspection des plaques-entretoises et des espaces inter-tubes suivant la hauteur du faisceau et des opérations de nettoyage par lançage, par jet de liquide, de la plaque tubulaire et des plaques-entretoises.

Ces interventions à l'intérieur du faisceau du générateur de vapeur sont habituellement réalisées en introduisant par un trou de visite tel que le trou 12, au-dessus de la plaque tubulaire 5 du générateur de vapeur, dans l'espace libre central 18 du faisceau 3, un moyen d'intervention et des dispositifs de déplacement du moyen d'intervention à l'intérieur du faisceau.

Pour déplacer le moyen d'intervention, depuis le ru d'eau central du faisceau, au-dessus de la plaque tubulaire 5, jusqu'à une zone quelconque au-dessus d'une plaque-entretoise 6 ou dans un espace inter-tubes à une hauteur quelconque dans le faisceau, il est nécessaire d'utiliser des dispositifs de déplacement du moyen d'intervention dans la direction verticale. En outre, les plaques entretoises 6 doivent comporter, dans leur partie centrale de direction diamétrale exempte de trous de passage de tubes du faisceau, des ouvertures de grandes dimensions pour assurer le passage des moyens d'intervention et de ses dispositifs de déplacement dans la direction verticale. Dans le cas où les plaques-entretoises 6 du générateur de vapeur ne comportent pas d'ouverture dans leur zone centrale diamétrale, il n'est pas possible d'intervenir dans les parties supérieures du faisceau. En outre, toute intervention dans un espace inter-tubes suivant la hauteur du faisceau nécessite de nombreuses déflexions d'un élément souple de liaison et de transport du moyen d'intervention.

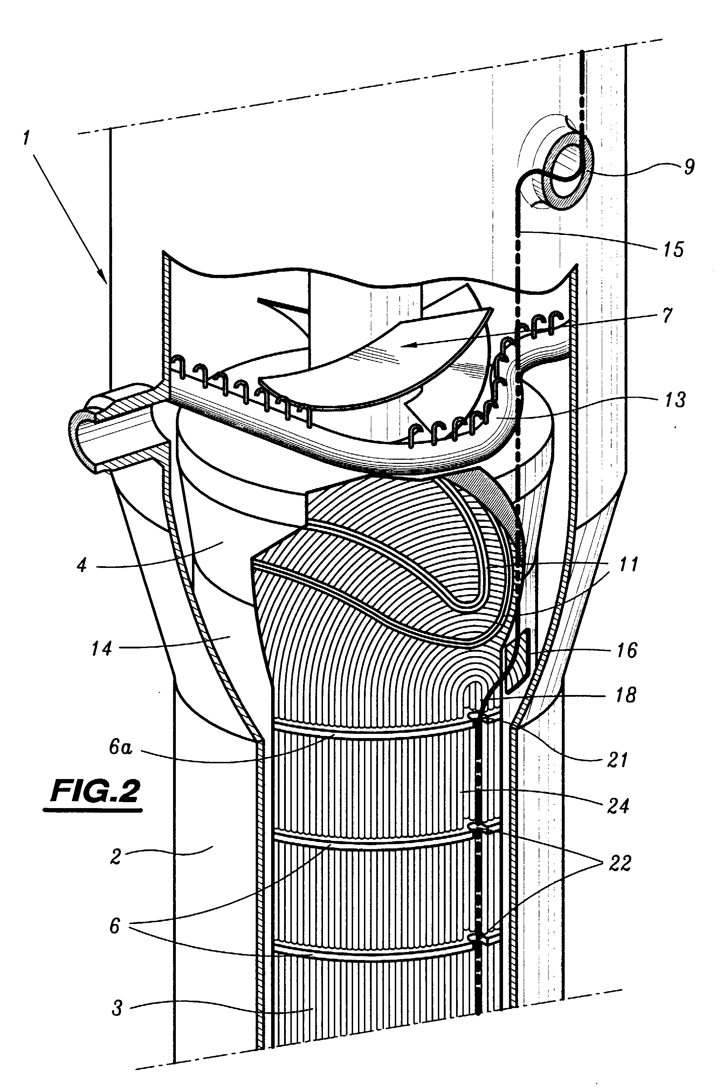

Pour éviter ces inconvénients, selon l'invention, comme il est visible sur la figure 2, on a proposé d'aménager la partie secondaire du générateur de vapeur, de manière à permettre un cheminement d'un moyen d'intervention à l'intérieur de la partie secondaire du générateur de vapeur, depuis un trou de visite 9 dans la partie supérieure de l'enveloppe externe et suivant un parcours représenté de manière schématique sous la forme de la ligne 15. La ligne 15, représentant le cheminement d'un moyen d'intervention dans la partie secondaire du générateur de vapeur, a pour point de départ le trou de visite 9 dans la partie supérieure de l'enveloppe externe 2 du générateur de vapeur, traverse ensuite la partie supérieure de l'enveloppe de faisceau 4 au niveau d'une fenêtre 16, puis descend sensiblement à la verticale, le long de l'enveloppe du faisceau, en vis-à-vis de l'espace libre central 18 du faisceau 3, en traversant des ouvertures ou rainures 21, 22 dans les parties périphériques des plaques-entretoises successives 6.

Afin de permettre le cheminement d'un moyen d'intervention suivant le parcours 15 à l'intérieur de la partie secondaire du générateur de vapeur, il est nécessaire d'effectuer certains aménagements de la partie secondaire, en particulier par usinage et découpage de certains tubes du faisceau et de parties périphériques des plaques-entretoises 6.

Comme il sera expliqué plus loin, suivant le type de générateur de vapeur dans lequel on doit réaliser l'intervention, les usinages et découpages à effectuer à l'intérieur de la partie secondaire peuvent être réalisés suivant plusieurs variantes.

Dans tous les cas, il est nécessaire, dans un premier temps, de réaliser par usinage, dans la partie supérieure de l'enveloppe de faisceau 4, la fenêtre 16 de passage à l'intérieur de l'enveloppe. Pour cela, on réalise un découpage par un procédé tel que le procédé d'électroérosion de la paroi de l'enveloppe de faisceau 4, suivant un contour rectangulaire.

Pendant les opérations d'aménagement de sa partie secondaire, le générateur de vapeur est généralement rempli d'eau, jusqu'au voisinage de la partie d'extrémité supérieure du faisceau de tubes 3.

Pour réaliser le découpage de la fenêtre 16 de passage, dans la partie supérieure de l'enveloppe de faisceau 4, on introduit, à l'intérieur de l'enveloppe externe 2 du faisceau, par le trou de visite supérieur 9, un outil d'usinage ou de perçage qui est descendu de manière contrôlée jusque dans la partie supérieure de l'espace annulaire entre l'enveloppe de faisceau 4 et la surface intérieure de l'enveloppe externe 2. Dans cette zone, l'enveloppe externe 2 est constituée par la virole tronconique intermédiaire entre la partie inférieure cylindrique à petit diamètre et la partie supérieure à grand diamètre de l'enveloppe externe 2.

On fixe le dispositif d'usinage sur la surface externe de l'enveloppe de faisceau 4, dans une position bien définie correspondant à la position de l'ouverture de passage 16 à réaliser.

Suivant le type de générateur de vapeur dans lequel on doit réaliser l'intervention, la partie supérieure de l'enveloppe de faisceau 4 peut présenter des formes différentes.

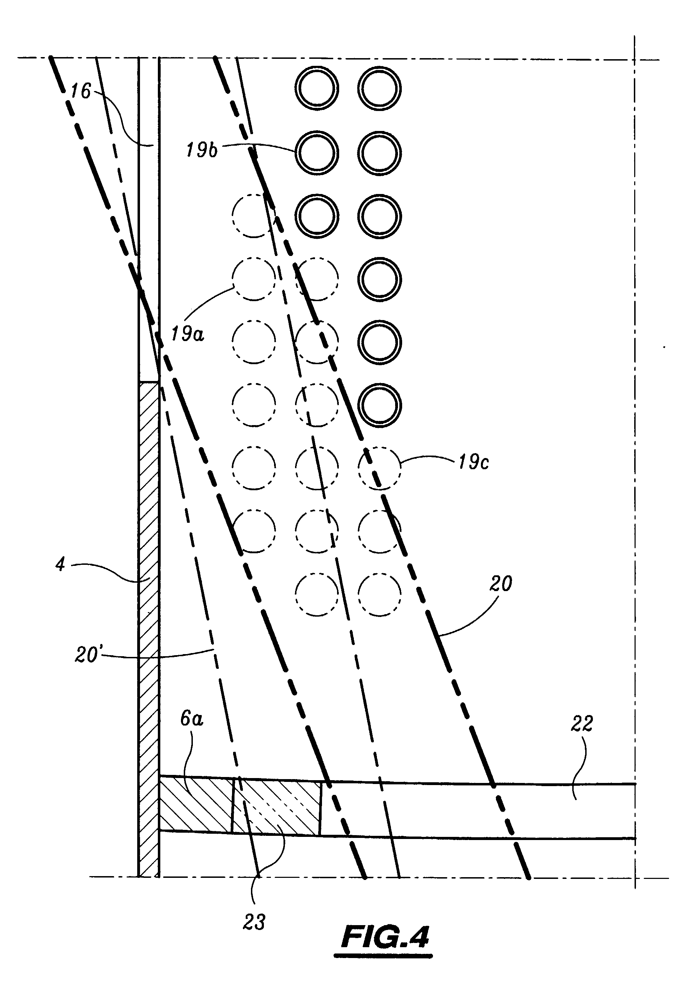

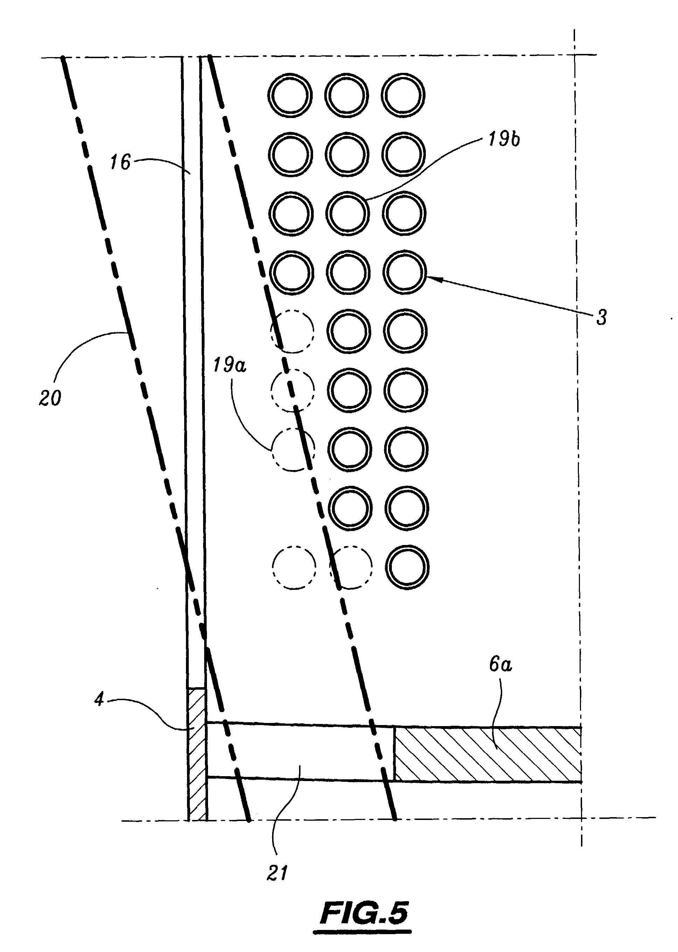

Comme représenté sur la figure 2 et sur les figures 4 et 5, dans le cas de générateur de vapeur de réacteur nucléaire à eau sous pression d'une puissance de 900 MWe, l'ouverture 16 peut être réalisée dans la partie supérieure de la virole cylindrique constituant le corps tubulaire de l'enveloppe de faisceau 4, dans une zone située légèrement au-dessus de la plaque-entretoise supérieure 6a, le bord inférieur de l'ouverture 16 se trouvant à une hauteur plus ou moins grande au-dessus de la plaque-entretoise supérieure 6a, suivant le type de générateur de vapeur pour réacteur nucléaire de 900 MWe et en particulier suivant la présence ou non d'ouvertures dans la partie centrale de la plaque-entretoise.

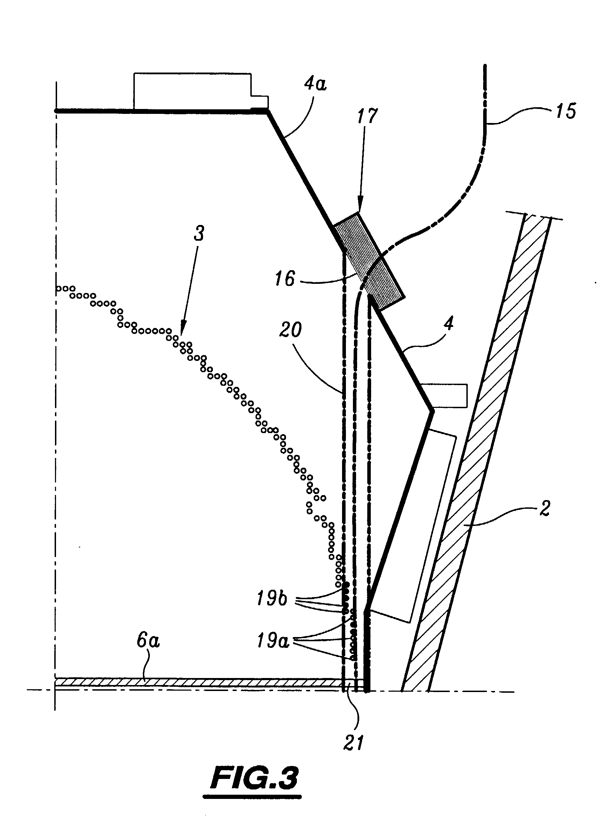

Dans le cas d'un générateur de vapeur, pour un réacteur nucléaire d'une puissance de 1300 MWe, tel que représenté sur la figure 3, l'enveloppe de faisceau 4 comporte, à sa partie supérieure, une virole tronconique 4a dont la petite base est constituée par la paroi d'extrémité plane supérieure de l'enveloppe de faisceau 4.

Dans ce cas, comme représenté sur la figure 3, le dispositif 17 d'usinage de l'ouverture de passage 16 est mis en place sur la virole tronconique 4a depuis le trou de visite supérieur 9 du générateur de vapeur, pour réaliser une ouverture 16 de forme rectangulaire à travers la paroi de la virole 4a.

Le dispositif d'usinage 17, qui peut être constitué avantageusement par un dispositif d'usinage par électroérosion, est mis en place par un outil approprié, depuis l'ouverture de visite 9 et l'usinage est commandé à distance par l'intermédiaire d'un câble souple de liaison du dispositif d'usinage 17 à un poste de commande situé à l'extérieur du générateur de vapeur.

De manière à assurer le passage des dispositifs d'inspection ou de nettoyage habituellement utilisés à l'intérieur du générateur de vapeur, il est nécessaire de prévoir un passage 20 dont la section est de l'ordre de 80 x 70 mm.

Dans le cas du générateur de vapeur représenté sur la figure 3, il est possible de prévoir un passage 20 de direction verticale à l'intérieur de l'enveloppe de faisceau 4. Pour aménager ce passage 20, il est nécessaire de prévoir une ouverture rectangulaire 16 dont les dimensions tiennent compte de l'inclinaison de la paroi 4a par rapport au plan horizontal.

L'ouverture 16 est réalisée, de manière que le passage vertical 20 à section rectangulaire se trouve exactement en vis-à-vis de l'espace libre central 18 du faisceau du générateur de vapeur.

La partie périphérique de la plaque entretoise supérieure 6a de maintien du faisceau 3 présente une rainure 21 traversante, de direction radiale, qui est utilisée, lors du montage du faisceau du générateur de vapeur, pour récupérer des olives d'engagement des tubes dans les ouvertures des plaques-entretoises et de la plaque tubulaire.

La rainure 21 est utilisée pour permettre le passage des dispositifs d'intervention dans la partie secondaire du générateur de vapeur, dans le prolongement du passage vertical 20.

Pour donner accès à la rainure 21 de la plaque-entretoise supérieure 6a, par le passage vertical 20, il est nécessaire de découper et d'éliminer les parties supérieures cintrées des tubes disposés suivant les nappes de tubes (par exemple les deux nappes de tubes 19a et 19b) les plus proches de la périphérie de la plaque-entretoise 6a qui sont disposées à l'aplomb de la rainure 21.

Cette opération de découpage des parties cintrées des tubes des nappes 19a et 19b (qui constituent des petits cintres à faible rayon de courbure) peut être réalisée depuis le côté primaire ou depuis le côté secondaire du générateur de vapeur.

Pour effectuer les opérations de découpage des petits cintres depuis le côté primaire, on engage dans chacune des branches rectilignes des tubes à découper, depuis la boîte à eau 10 du générateur de vapeur, en dessous de la plaque tubulaire 5, un outil d'expansion hydraulique. L'outil d'expansion hydraulique est déplacé suivant une hauteur suffisante pour qu'il parvienne à l'intérieur des tubes à découper, au niveau de la plaque-entretoise supérieure 6a du générateur de vapeur. On réalise alors l'expansion diamétrale des tubes à découper, dans les ouvertures de traversée correspondantes de la plaque-entretoise supérieure. Les branches rectilignes des tubes sont ainsi fixées à leur partie supérieure dans la plaque-entretoise 6a.

On engage ensuite, dans les parties rectilignes des tubes à découper, depuis la boîte à eau, un outil de coupe de tube par l'intérieur tel qu'un coupe-tube souple à molette, de manière à réaliser le découpage des tubes, juste au-dessus de la plaque-entretoise supérieure 6a.

Les cintres qui ont été coupés sont sortis du générateur de vapeur par le trou de visite 9 de l'enveloppe externe du générateur de vapeur, en utilisant un outil à pince commandé à distance qui est introduit dans l'enveloppe de faisceau 4, par l'ouverture de passage 16.

Lorsqu'on effectue les opérations de découpage depuis le côté secondaire du générateur de vapeur, on introduit une machine d'usinage mécanique ou par électroérosion à l'intérieur de l'enveloppe externe 2 du générateur de vapeur, par le trou de visite supérieur 9 de l'enveloppe externe, puis à l'intérieur de l'enveloppe de faisceau 4, par l'ouverture de passage 16. La machine d'usinage ou de découpage est mise en place, de manière à réaliser la coupe de parties rectilignes des tubes, en dessous des cintres et au-dessus de la plaque-entretoise supérieure 6a. Les cintres découpés sont sortis de l'enveloppe externe par le trou de visite supérieur 9.

On introduit alors un outil d'expansion dans l'enveloppe externe du générateur de vapeur et on met en place l'expanseur hydraulique de l'outil d'expansion dans les branches droites des tubes qui ont été découpées, de manière que l'expanseur hydraulique se trouve au niveau de la plaque-entretoise supérieure 6a. On réalise l'expansion des parties rectilignes des tubes dans les ouvertures de traversée correspondantes de la plaque-entretoise supérieure 6a. Les tubes sont ainsi maintenus à leur partie supérieure.

A l'issue de cette opération, le passage 20 donne accès directement à la rainure 21 de récupération d'ogives de la plaque-entretoise supérieure 6a.

Chacune des plaques-entretoises 6 comporte, dans sa partie périphérique, une rainure traversante 22 sensiblement analogue à la rainure 21 de la plaque-entretoise supérieure 6a.

Les rainures 21 et 22 sont alignées suivant la direction verticale en vis-à-vis de l'espace libre central 18 du générateur de vapeur, comme il est visible sur la figure 2.

Le parcours de cheminement 15 d'un outil d'intervention traverse chacune des rainures 21, 22 dans la partie périphérique des plaques-entretoises successives 6a et 6.

Dans certains cas, il est nécessaire, pour permettre le passage du moyen d'intervention dans les rainures 21 et 22, de réusiner ces rainures pour les élargir suivant la circonférence de la plaque-entretoise correspondante ou de les allonger suivant la direction radiale.

Pour cela, on fait pénétrer dans l'enveloppe externe du générateur de vapeur puis, à travers la fenêtre 16, dans l'enveloppe de faisceau 4, un outil d'usinage qui est mis en place successivement au niveau de chacune des plaques-entretoises successives 6a et 6. L'outil d'usinage, pour l'élargissement des rainures 21 et 22, est descendu dans l'enveloppe de faisceau du générateur de vapeur, d'une plaque-entretoise à la suivante située immédiatement en dessous, selon le parcours du cheminement 15.

Dans certains cas, les plaques-entretoises ne comportent pas de rainures de passage d'ogives dans leur partie périphérique en face de l'espace libre central 18 du générateur de vapeur. Dans ce cas, on utilise l'outil d'usinage qui est introduit dans l'enveloppe externe puis dans l'enveloppe de faisceau par la fenêtre 16, pour réaliser les rainures sur les plaques-entretoises successives 6a et 6, suivant le parcours du cheminement vertical 15.

On peut donc être amené, de manière générale, à utiliser un premier dispositif d'usinage qui est introduit dans le générateur de vapeur par le trou de visite supérieur de l'enveloppe externe, pour réaliser une ouverture de passage à travers l'enveloppe de faisceau, un second dispositif d'usinage pour le découpage des tubes et un troisième dispositif d'usinage, pour découper ou agrandir des rainures de passage à travers les plaques-entretoises.

Pour réaliser une opération d'intervention à l'intérieur du faisceau du générateur de vapeur, au niveau d'une plaque-entretoise quelconque, le moyen d'intervention est descendu dans le générateur de vapeur suivant le parcours de cheminement 15 jusqu'au niveau de la plaque-entretoise 6 au-dessus de laquelle on réalise l'intervention. Le moyen d'intervention est alors déplacé à l'intérieur de l'espace libre central 18 du générateur de vapeur, au-dessus de la plaque-entretoise 6. Le déplacement du moyen d'intervention peut être réalisé suivant toute la largeur de l'espace libre central 18, entre les deux extrémités latérales du faisceau de tubes 3, de manière à accéder à toutes les zones du faisceau et par exemple à réaliser des opérations d'inspection ou de nettoyage entre deux nappes successives quelconques du faisceau.

Toutefois, pour certains générateurs de vapeur, l'espace libre central 18 du générateur de vapeur peut être partiellement obstrué dans la partie centrale du faisceau, par un dispositif de maintien, par exemple par un tirant de maintien des plaques-entretoises.

Dans ce cas, pour accéder à toutes les zones du faisceau, on peut réaliser des opérations d'aménagement similaires de la partie secondaire du faisceau de part et d'autre de l'espace libre central 18.

En particulier, on réalise par usinage une seconde fenêtre analogue à la fenêtre 16, dans une position symétrique de la position de la fenêtre 16, par rapport à un plan axial du faisceau, la seconde fenêtre se trouvant en vis-à-vis de la seconde extrémité transversale de l'espace libre central 18 du faisceau.

On effectue le découpage des petits cintres, au-dessus de la plaque-entretoise supérieure 6a, au voisinage de la seconde extrémité transversale de l'espace libre central 18 du faisceau 3 du générateur de vapeur.

On réalise également un réusinage ou un usinage de rainures traversant les plaques-entretoises dans leur partie périphérique qui sont alignées suivant la direction axiale de la seconde extrémité transversale de l'espace libre central 18.

On peut alors avoir accès à l'ensemble du faisceau 3 du générateur de vapeur.

Pour réaliser les opérations d'aménagement de la partie secondaire du générateur de vapeur à la seconde extrémité de l'espace libre central 18, il est bien entendu souhaitable de disposer d'un trou de visite situé sensiblement à l'aplomb de la seconde zone d'intervention. Tous les usinages sont réalisés de préférence par électroérosion, sous eau, l'enveloppe du générateur de vapeur étant remplie d'eau jusqu'à un niveau situé au-dessus de la plaque-entretoise supérieure 6a.

Sur la figure 4, on a représenté une partie supérieure d'un générateur de vapeur d'un réacteur nucléaire d'une puissance de 900 MWe, selon une première forme de réalisation. La partie du générateur de vapeur représentée sur la figure est située dans le prolongement de l'espace libre central 18 du générateur de vapeur. Dans ce type de générateur de vapeur, la plaque-entretoise supérieure 6a comporte des ouvertures rectangulaires de grande longueur 22 alignées suivant l'espace libre central 18 du générateur de vapeur.

Pour réaliser l'aménagement de la partie supérieure du générateur de vapeur, on réalise, comme décrit précédemment, en regard de la figure 2, une ouverture rectangulaire 16 dans la partie supérieure cylindrique de l'enveloppe de faisceau 4.

Dans le cas du générateur de vapeur représenté sur la figure 4, on réalise de préférence une ouverture rectangulaire ayant une largeur voisine de 80 mm dans le sens de la circonférence de l'enveloppe de faisceau 4 et une longueur de l'ordre de 280 mm, dans la direction axiale de l'enveloppe de faisceau 4.

Comme il est visible sur la figure, on rend ainsi accessible l'ouverture traversante 22 de la plaque-entretoise supérieure 6a, par un passage légèrement incliné ayant une section sensiblement carrée de 80 mm de côté environ, après découpage de cintres de tubes du faisceau des nappes 19a, 19b, 19c situés au-dessus de la plaque-entretoise supérieure 6a.

Le parcours de cheminement d'un outil d'intervention dans la partie secondaire du générateur de vapeur a donc une partie initiale inclinée à l'intérieur de l'enveloppe de faisceau 4.

Les plaques-entretoises situées en-dessous de la plaque 6a présentent, suivant l'espace libre central 18, des ouvertures alignées dans la direction verticale. Le parcours de cheminement de l'outil d'intervention initialement incliné par rapport à la verticale est donc ensuite vertical, comme dans le cas précédemment décrit.

Il est possible également de réusiner la plaque-entretoise supérieure 6a, par exemple dans une zone 23, de manière à allonger vers l'extérieur l'ouverture 22 de cette plaque-entretoise. On peut alors avoir accès plus facilement à l'ouverture 22, suivant un parcours 20' moins incliné par rapport à la verticale.

Sur la figure 5, on a représenté une partie supérieure à l'intérieur du secondaire d'un générateur de vapeur d'un réacteur nucléaire à eau sous pression d'une puissance de 900 MWe et d'un second type différent du premier type représenté sur la figure 4.

Dans ce type de générateur de vapeur, la plaque entretoise supérieure 6a comporte une rainure traversante 21 dans sa partie périphérique. Dans ce cas, l'ouverture 16 réalisée dans la partie cylindrique supérieure de l'enveloppe de faisceau 4, comme représenté sur la figure 2, présente de préférence une largeur dans la direction circonférentielle de 80 mm et une hauteur dans la direction axiale de l'enveloppe de faisceau 4, de 440 mm, le bord inférieur de l'ouverture 16 étant situé à une très faible distance au-dessus de la face supérieure de la plaque-entretoise 6a.

Le passage 20 pour un outil d'intervention qui présente un angle d'inclinaison faible par rapport à la verticale et une section de l'ordre de 80 x 80 mm est obtenu en découpant certains petits cintres suivant la nappe de tubes 19a du faisceau du générateur de vapeur. Le passage 20 est donc obtenu en découpant un nombre réduit de petits cintres du faisceau.

Les plaques-entretoises du faisceau du générateur de vapeur qui sont situées en-dessous de la plaque-entretoise supérieure 6a comportent également des rainures de passage dans leur partie périphérique qui sont utilisées habituellement pour l'extraction d'olives d'insertion des tubes du faisceau du générateur de vapeur, au moment du montage du faisceau.

Bien entendu, la rainure 21 de la plaque 6a et les rainures successives disposées à l'aplomb l'une de l'autre des plaques-entretoises successives du faisceau peuvent être réusinées de manière à accroître les dimensions du passage 20.

Comme précédemment, le passage 20 comporte donc une première partie faiblement inclinée par rapport à la direction verticale et une seconde partie verticale.

Dans tous les cas, quel que soit le type de générateur de vapeur dans lequel on désire réaliser une intervention et sur lequel on réalise l'aménagement de la partie secondaire, après avoir percé l'ouverture 16 de passage à l'intérieur de l'enveloppe de faisceau 4, on agence cette ouverture de manière qu'elle puisse recevoir d'une part une tape d'obturation qui est posée à distance, et d'autre part, une platine de positionnement et de bridage d'un outil d'intervention également posé à distance, depuis le trou de visite de la partie supérieure de l'enveloppe externe du générateur de vapeur.

Après l'intervention dans le générateur de vapeur, on met en place la tape d'obturation sur l'ouverture 16 pour éviter un effet de by-pass sur la circulation de l'eau d'alimentation du générateur de vapeur, pendant le fonctionnement normal du générateur de vapeur.

Il peut être souhaitable également d'usiner des fenêtres à travers la paroi des branches rectilignes des petits cintres (tels que 24 sur la figure 2), juste au-dessus de chacune des plaques-entretoises 6 et éventuellement juste au-dessus de la plaque-entretoise supérieure 6a. Ces fenêtres sont réalisées de préférence par usinage par l'extérieur des tubes, depuis le côté secondaire du générateur de vapeur. L'usinage est réalisé de préférence par électroérosion et concerne généralement les tubes dont on a découpé les petits cintres ou des tubes proches des parties d'extrémité latérales de l'espace libre central 18 du faisceau du générateur de vapeur.

Les fenêtres pourraient être réalisées également par l'intérieur des tubes, depuis le côté primaire du générateur de vapeur.

Les fenêtres sont dirigées vers l'intérieur du faisceau, de manière qu'un dispositif de visualisation et d'inspection introduit dans les tubes comportant les fenêtres puissent fournir une image de la partie interne du faisceau.

Dans tous les cas, on réalise le bouchage des parties d'extrémité des tubes dont les cintres ont été découpés ou dans lesquels on a réalisé des fenêtres, au niveau d'une plaque-entretoise du générateur de vapeur.

Après un certain temps de fonctionnement du générateur de vapeur dont on a aménagé le secondaire pour réaliser un parcours de cheminement d'un moyen d'intervention, il est possible de réaliser une intervention, telle qu'une inspection ou un nettoyage ou encore une réparation, à l'intérieur du faisceau du générateur de vapeur.

Après arrêt et refroidissement du réacteur nucléaire, l'enveloppe externe du générateur de vapeur étant de préférence partiellement remplie d'eau, on ouvre la tape d'obturation de l'ouverture de visite supérieure 9 du générateur de vapeur pour donner accès à la partie secondaire du générateur de vapeur.

On réalise à distance le démontage de la tape d'obturation de l'ouverture 16 donnant accès à l'intérieur de l'enveloppe de faisceau 4.

De préférence, l'ensemble du secondaire du générateur de vapeur est rempli d'eau jusqu'à la plaque-entretoise supérieure, pendant toutes les opérations de mise en place du moyen d'intervention.

Le moyen d'intervention est introduit puis déplacé suivant le parcours de cheminement 15 tout d'abord dans la partie supérieure de l'enveloppe externe 2, puis à travers l'ouverture 16 et le long de l'enveloppe de faisceau 4, dans la direction verticale, à travers les rainures 21 et 22 traversant les plaques-entretoises.

De préférence, la mise en place et le déplacement du moyen d'intervention est réalisé à l'aide d'une platine qui est fixée sur l'enveloppe de faisceau 4, au niveau de l'ouverture 16, en remplacement de la tape d'obturation. Le moyen d'intervention comporte un élément de liaison souple tel qu'un câble qui est déplacé par traction ou par poussée pour permettre le déplacement du dispositif d'intervention.

On arrête le déplacement du moyen d'intervention suivant le parcours vertical 15, lorsque le moyen d'intervention est parvenue au niveau de la plaque-entretoise 6 au niveau de laquelle on réalise l'intervention.

Le moyen d'intervention peut alors être déplacé vers l'intérieur du faisceau, dans l'espace libre central 18 du générateur de vapeur et éventuellement entre deux nappes de tubes, dans une direction perpendiculaire à la direction transversale de l'espace libre central 18 du générateur de vapeur.

Même dans ce cas, l'élément souple de liaison du moyen d'intervention ne subit que deux déflexions pour parvenir dans une zone quelconque à l'intérieur du faisceau du générateur de vapeur.

Suivant le type d'intervention à effectuer, on peut maintenir la partie secondaire du générateur de vapeur sous eau, ou au contraire assurer la vidange du générateur de vapeur, avant d'effectuer l'intervention.

A la fin de l'intervention, le moyen d'intervention est sorti du faisceau et de l'enveloppe du générateur de vapeur et la tape d'obturation de l'ouverture 16 de l'enveloppe de faisceau est remise en place.

L'invention permet donc d'intervenir dans une zone quelconque à l'intérieur d'un générateur de vapeur, par déplacement d'un moyen d'intervention, depuis la partie supérieure du générateur de vapeur, suivant un parcours dans la direction verticale, dans sa majeure partie.

Les opérations de mise en place du moyen d'intervention dans le générateur de vapeur sont facilitées et ces opérations ne requièrent pas l'utilisation de dispositif de déplacement complexe du moyen d'intervention.

L'invention ne se limite pas au mode de réalisation qui a été décrit.

C'est ainsi que, suivant le type de générateur de vapeur, après avoir réalisé par usinage une ouverture de passage dans l'enveloppe du faisceau, il est possible d'effectuer des usinages des tubes et des plaques-entretoises différents des usinages qui ont été décrits, de manière à donner accès à de nombreuses zones d'intervention dans la partie secondaire du générateur de vapeur.

L'invention s'applique à tout générateur de vapeur comportant une enveloppe externe et une enveloppe de faisceau, dans laquelle le faisceau de tubes du générateur de vapeur est maintenu par des plaques-entretoises.

## Revendications

1. Procédé d'aménagement des structures internes d'un générateur de vapeur (1), en vue de l'introduction et de la mise en place d'un moyen d'intervention en position de service dans une partie des structures internes, le générateur de vapeur (1) comportant une enveloppe externe (2) de forme générale cylindrique disposée avec son axe vertical et les structures internes qui comportent un faisceau (3) de tubes d'échange cintrés en U dont les branches droites verticales sont fixées à leurs extrémités dans des trous traversant une plaque tubulaire (5) solidaire de l'enveloppe externe (2) qui sont disposés de manière telle qu'il subsiste un espace vide de tubes (18) dans une partie centrale du faisceau (3) de direction diamétrale, une enveloppe de faisceau (4) de forme générale cylindrique, disposée coaxialement à l'intérieur de l'enveloppe externe (2), entourant le faisceau et fermée à sa partie supérieure, au-dessus de la partie supérieure du faisceau (3) constituée par les parties cintrées des tubes, une pluralité de plaques-entretoises (6a, 6) de maintien des tubes du faisceau sensiblement horizontales et réparties suivant la direction verticale du générateur de vapeur (1) et une ouverture de visite (9) traversant l'enveloppe externe (2) dans sa partie supérieure, caractérisé par le fait :
- qu'on introduit un premier dispositif d'usinage (17) dans l'enveloppe externe (2) par le trou de visite (9),
- qu'on met en place le premier dispositif d'usinage (17) sur une partie supérieure de l'enveloppe de faisceau (4),
- qu'on réalise, par usinage, au moins une ouverture de passage (16) à travers l'enveloppe de faisceau (4) dans sa partie supérieure,
- qu'on introduit, dans l'enveloppe de faisceau (4) par l'ouverture de passage (16), au moins un second dispositif d'usinage, et
- qu'on réalise, en utilisant l'au moins un second dispositif d'usinage, par découpage de tubes du faisceau et éventuellement de parties (21, 22) des plaques-entretoises, un passage de cheminement (15) du moyen d'intervention vers une pluralité de zones d'intervention dans le faisceau de tubes (3) du générateur de vapeur.

2. Procédé suivant la revendication 1, caractérisé par le fait qu'on réalise le découpage de parties cintrées de tubes du faisceau (3) disposées au-dessus d'une partie périphérique d'une plaque-entretoise supérieure (6a) du faisceau (3) du générateur de vapeur (1) et qu'on extrait les parties cintrées des tubes découpés de l'enveloppe de faisceau (4) par l'ouverture de passage (16) et de l'enveloppe externe (2) du générateur de vapeur (1) par l'ouverture de visite (9).

3. Procédé suivant la revendication 2, caractérisé par le fait que la partie périphérique de la plaque-entretoise supérieure (6a) du faisceau (3) du générateur de vapeur comporte une rainure traversante (21) et que chacune des plaques-entretoises (6) du faisceau (3) du générateur de vapeur (1) comporte, dans des dispositions alignées dans une direction verticale avec la rainure (21) traversant la partie périphérique de la plaque-entretoise supérieure (6a), des rainures (22), de manière que le passage de cheminement (15) de l'outil d'intervention ait un parcours partant de l'ouverture de visite (9) dans la partie supérieure de l'enveloppe externe (2) du générateur de vapeur (1), traversant l'ouverture de passage (16) de l'enveloppe de faisceau (4) et les rainures alignées (21, 22) de la plaque-entretoise supérieure (6a) et des plaques-entretoises successives (6), dans une direction verticale, de manière à parvenir jusqu'à une plaque-entretoise quelconque du faisceau (3) du générateur de vapeur et, par l'intermédiaire du passage libre central (18) du générateur de vapeur, en un point quelconque à l'intérieur du faisceau (3) du générateur de vapeur.

4. Procédé suivant la revendication 3, caractérisé par le fait que la rainure (21) de la plaque-entretoise supérieure(6a) et les rainures (22) des plaques-entretoises successives (6) sont des rainures existantes sur le générateur de vapeur utilisées pour l'extraction d'olives de guidage des tubes du faisceau (3) du générateur de vapeur utilisées lors du montage du faisceau (3).

5. Procédé suivant la revendication 4, caractérisé par le fait qu'on agrandit par usinage les rainures (21, 22) de la plaque-entretoise supérieure (6a) et des plaques-entretoises successives (6) du faisceau (3) du générateur de vapeur (1) en utilisant un troisième dispositif d'usinage introduit à travers l'ouverture de passage (16).

6. Procédé suivant la revendication 3, caractérisé par le fait qu'on usine la rainure (21) de la plaque entretoise supérieure (6a) et les rainures (22) des plaques entretoises (6) successives du faisceau (3) en utilisant un troisième dispositif d'usinage introduit par l'ouverture de passage (16), dans l'enveloppe de faisceau (4).

7. Procédé suivant la revendication 2, caractérisé par le fait que le découpage des parties cintrées des tubes du faisceau (3) du générateur de vapeur (1) est réalisé par l'extérieur des tubes, en utilisant le second dispositif d'usinage introduit dans l'enveloppe de faisceau (4) par l'ouverture de passage (16).

8. Procédé suivant la revendication 2, caractérisé par le fait que le découpage des parties cintrées des tubes du faisceau (3) est réalisé par l'intérieur des tubes, en introduisant, depuis la boîte à eau (10) du générateur de vapeur, à l'intérieur des tubes, un outil de découpage.

9. Procédé suivant l'une quelconque des revendications 2, 7 et 8, caractérisé par le fait qu'on fixe les extrémités des tubes découpés à la plaque entretoise supérieure (6a), par expansion à l'intérieur d'ouvertures de passage des tubes à travers la plaque entretoise supérieure (6a).

10. Procédé suivant l'une quelconque des revendications 1 à 9, caractérisé par le fait qu'on réalise dans au moins un tube (24) du faisceau de tubes (3) du générateur de vapeur disposé au voisinage d'une extrémité latérale de l'espace libre central (18) du faisceau du générateur de vapeur, au moins une fenêtre dirigée vers l'intérieur du faisceau (3) à travers la paroi du tube (24), au-dessus de chacune des plaques-entretoises (6a, 6) du faisceau (3) du générateur de vapeur.

11. Procédé suivant l'une quelconque des revendications 2 et 7 à 10, caractérisé par le fait qu'on réalise le bouchage, au niveau de la plaque tubulaire (5) des extrémités de chacun des tubes (24) du faisceau (3), dont on a découpé des parties cintrées et/ou dans lesquels on a réalisé des fenêtres ouvertes vers l'intérieur du faisceau du générateur de vapeur.

12. Procédé suivant l'une quelconque des revendications 1 à 11, caractérisé par le fait que l'un au moins du premier et du second dispositifs d'usinage est un dispositif par électroérosion.

13. Procédé suivant l'une quelconque des revendications 1 à 12, caractérisé par le fait que pendant la mise en oeuvre du procédé d'aménagement, l'enveloppe externe (2) du générateur de vapeur renferme de l'eau, au moins jusqu'au niveau d'une plaque-entretoise supérieure (6a).

14. Procédé suivant l'une quelconque des revendications 1 à 13, caractérisé par le fait qu'on réalise deux ouvertures de passage (16) à travers l'enveloppe de faisceau (4) du générateur de vapeur (1) dans la partie supérieure de l'enveloppe de faisceau (4), sensiblement en vis-à-vis des extrémités latérales de l'espace libre central (18) traversant le faisceau (3) du générateur de vapeur dans une direction diamétrale.

15. Procédé suivant la revendication 14, caractérisé par le fait qu'on réalise un premier et un second passages de cheminement (15) du moyen d'intervention, de part et d'autre du faisceau (3) du générateur de vapeur, en vis-à-vis des extrémités latérales de l'espace libre central (18) du faisceau (3) du générateur de vapeur.
